# EUROPÄISCHE PATENTSCHRIFT

(11) **EP 2 222 488 B1**
(45) Veröffentlichungstag und Bekanntmachung des Hinweises auf die Patenterteilung: **27.03.2013**
(21) Anmeldenummer: 08805201.4
(22) Anmeldetag: 10.10.2008
(51) Int. Cl.: B60G 17/015, B60G 17/052, F04B 27/02, F04B 49/035, F04B 41/06, F04B 27/00

(54) **GESCHLOSSENE NIVEAUREGELANLAGE FÜR EIN FAHRZEUG**
CLOSED LEVEL CONTROLLER FOR A VEHICLE
SYSTÈME FERMÉ RÉGULATEUR DE NIVEAU POUR VÉHICULE

(30) Priorität: 13.12.2007 DE 102007060076
(43) Veröffentlichungstag der Anmeldung: 01.09.2010
(73) Patentinhaber: Continental Teves AG & Co. OHG, 60488 Frankfurt (DE)
(72) Erfinder: HEIN, Dirk, 30900 Wedemark (DE); ENGELKE, Thomas, 30159 Hannover (DE)
(86) Internationale Anmeldenummer: PCT/EP2008/063579
(87) Internationale Veröffentlichungsnummer: WO 2009/074367

(56) Entgegenhaltungen:
- EP-A- 1 243 447
- DE-A1- 3 507 550
- DE-A1- 10 243 895
- DE-A1- 10 321 771
- DE-A1- 19 715 291

## Beschreibung

Die Erfindung betrifft eine geschlossene Niveauregelanlage für ein Fahrzeug gemäß dem Oberbegriff des Anspruchs 1.

Geschlossene Niveauregelanlagen dieser Art sind aus dem Stand der Technik, z.B. aus der EP 1 243 447 B1, seit langem bekannt. In einer geschlossenen Niveauregelanlage wird mit Hilfe des Kompressors Druckluft von dem Druckluftspeicher in die Luftfedern überführt (wenn der Aufbau des Fahrzeuges angehoben werden soll), oder Druckluft aus den Luftfedern in den Druckluftspeicher überführt (wenn der Fahrzeugaufbau abgesenkt werden soll). Sowohl in dem Druckluftspeicher als auch in den Lunftfern liegt ein hoher Luftdruck vor. Hierdurch wird der Vorteil erreicht, dass mit Hilfe des Kompressors schnell Druckluft zwischen dem Druckluftspeicher und den Luftfedern hin- und hergepumpt und der Aufbau des Fahrzeuges somit schnell angehoben oder abgesenkt werden kann. Es ist jedoch festzustellen, dass der hohe Druck in dem Druckluftspeicher bzw. in den Lufffedern zu einem hohen Druck in dem Saugraum des Kompressors führt, gegen den der Kompressor arbeiten muss. Dies führt zu einem hohen Leistungsbedarf des Kompressors, der von dem Bordnetz des Fahrzeuges nicht immer bereitgestellt werden kann. Aus diesem Grunde werden bei einem Kompressor für eine geschlossene Niveauregelanlage das Hubvolumen und damit die Leistungsaufnahme des Kompressors begrenzt. Die Begrenzung des Hubvolumens ist unproblematisch, so lange zwischen dem Druckluftspeicher und den Luftfedern der Niveauregelanlage nur geringe Luftmengen hin- und hergepumpt zu werden brauchen. Dies ist der Fall, wenn sowohl die Luftfedern als auch der Druckluftspeicher ausreichend mit Druckluft gefüllt sind. Bei der ersten Befüllung des Druckluftspeichers bzw. bei einer Befüllung des Druckluftspeichers mit einer großen Luftmenge (z.B. zum Leckageausgleich) muss jedoch eine große Luftmenge in den Druckluftspeicher überführt werden. In diesen Fällen ist das kleine Hubvolumen des Kompressors hinderlich, da der Kompressor sehr lange laufen muss, um den Druckluftspeicher zu befüllen.

Daher ist auch schon vorgeschlagen worden, in geschlossenen Niveaurgelanlagen einen Kompressor mit einer Niederdruckstufe und einer Hochdruckstufe zu verwenden. Ein derartiger Kompressor ist beispielsweise aus der DE 103 21 771 A1 bekannt. Bei dem aus dieser Druckschrift bekannten Kompressor ist der Saugraum mit dem Verdichtungsvolumen der Niederdruckstufe über eine Druckluftleitung verbunden, in der sich ein Ventil befindet. Solange das Ventil in der Druckluftleitung geschlossen ist, wird mit Hilfe des Kompressors die Druckluft in der Niederdruckstufe vorkompremiert, in die Hochdruckstufe überführt und von dort geht die Druckluft in die Auslassleitung. In diesem Fall können mit dem Kompressor große Luftmengen gefördert werden, um z.B. den leeren Druckluftspeicher der Niveauregelanlage zu befüllen.

Liegt hingegen ein hoher Druck in dem Saugraum des Kompressors vor, so öffnet sich das Ventil in der Druckluftleitung automatisch, so dass Druckgleichgewicht zwischen dem Saugraum und dem Verdichtungsvolumen der Niederdruckstufe herrscht. In diesem Fall nimmt die Niederdruckstufe des Kompressors nicht mehr an der Kompression der Druckluft teil. Vielmehr wird ausschließlich Druckluft in die Hochdruckstufe überführt und dort komprimiert. Der Kompressor kann dann nur noch kleine Luftmenge, z.B. von dem gefüllten Druckluftspeicher in die Luftfedern überführen.

Der aus der DE 103 21 771 A1 bekannte Kompressor weist den Vorteil auf, dass mit ihm sowohl große Luftmengen (bei geringem Luftdruck im Saugraum) als auch kleine Luftmengen (bei einem hohen Luftdruck im Saugraum) gefördert werden können, ohne dass der Kompressor eine zu hohe Leistungsaufnahme hat. Es ist jedoch festzustellen, dass der Kompressor einen komplizierten und teueren Aufbau aufweist. Ferner ist festzustellen, dass die Niederdruck- und die Hochdruckstufe des Kompressors immer miteinander verbunden sind, so dass die beiden Druckstufen nicht unabhängig voneinander arbeiten können. Zusätzlich führt dies dazu, dass beide Druckstufen den gleichen Hub machen. Daher muss der Kolben der Hochdruckstufe einen kleinen Durchmesser aufweisen, was dessen Herstellung erschwert.

Aus der DE 102 43 895 A1 und der DE 35 07 550 A1 sind ebenfalls Niveauregelanlagen gemäß dem Oberbegriff des Anspruchs 1 bekannt.

Der Erfindung liegt die Aufgabe zugrunde, eine geschlossene Niveauregelanlage mit einem Kompressor zu schaffen, der einen einfachen Aufbau aufweist und mit dem auf einfache Art und Weise große und kleine Luftmengen gefördert werden können.

Die Aufgabe wird durch die kennzeichnenden Merkmale des Anspruchs 1 gelöst.

Ein Vorteil der Erfindung ist darin zu sehen, dass der Kompressor einen einfachen Aufbau aufweist. So weist der Kompressor zwei Verdichtungsvolumina auf, die jeweils separat über ein Rückschlagventil mit dem Saugraum des Kompressors verbunden sind. Eine aufwendige Verbindung der beiden Verdichtungsvolumina durch einen besonders ausgebildeten Kolben, sowie es bei dem aus der DE 103 21 77 A1 bekannten Kompressor der Fall ist, entfällt somit. Ein weiterer Vorteil der Erfindung ist darin zu sehen, dass die beiden Verdichtungsvolumina trotz des einfachen Aufbaus des Kompressors vollkommen unabhängig voneinander betrieben werden können, da sie nicht miteinander in Verbindung stehen. Insbesondere kann das zweite Verdichtungsvolumen abgeschaltet werden, so dass es keine Druckluft in die geschlossene Niveauregelanlage fördert. Ferner kann das zweite Verdichtungsvolumen dem ersten Verdichtungsvolumen zugeschaltet werden, so dass sowohl das erste als auch das zweite Verdichtungsvolumen unabhängig voneinander Druckluft in die Verbraucher der Niveauregelanlage überführen. Ein weiterer Vorteil der Erfindung ist darin zu sehen, dass bei dem Ausfall eines Verdichtungsvolumen immer noch das andere Verdichtungsvolumen für die Förderung von Druckluft zur Verfügung steht, da die beiden Verdichtungsvolumina unabhängig voneinander arbeiten. Ein weiterer Vorteil der Erfindung ist schließlich darin zu sehen, dass die Auslegung jedes Verdichtungsvolumens bzgl. des Hubs und des Durchmessers der Kolben unabhängig voneinander erfolgen kann und daher eine separate Optimierung dieser Parameter möglich ist.

Ein Ausführungsbeispiel der Erfindung gemäß Anspruch 2 ist dadurch gekennzeichnet, dass der Kompressor zusätzlich folgende Bestandteile aufweist:
- eine zweite Auslassleitung, die einerseits an das zweite Verdichtungsvolumen angeschlossen ist und andererseits an unterschiedliche Verbraucher anschließbar ist, wobei die zweite Auslassleitung durch ein erstes steuerbares Wegeventil durchgeschaltet oder gesperrt werden kann,
- eine erste Saugraumleitung, die einerseits an das zweite Verdichtungsvolumen angeschlossen ist, und andererseits an den Saugraum angeschlossen ist, wobei die erste Saugraumleitung durch ein zweites steuerbares Wegeventil durchgeschaltet oder gesperrt werden kann,
- wobei das erste und das zweite steuerbare Wegeventil so gesteuert werden, dass die zweite Auslassleitung gesperrt ist, wenn die erste Saugraumleitung durchgeschaltet ist bzw. die zweite Auslassleitung durchgeschaltet ist, wenn die erste Saugraumleitung gesperrt ist.

Das zweite Verdichtungsvolumen ist also abgeschaltet, wenn die erste Saugraumleitung durchgeschaltet ist, und dem ersten Verdichtungsvolumen zugeschaltet, wenn die erste Saugraumleitung gesperrt ist. Das zweite steuerbare Wegeventil übernimmt also die Funktion des Schalters, mit dem das zweite Verdichtungsvolumen zu- oder abgeschaltet wird. Der Vorteil der Weiterbildung nach Anspruch 2 ist darin zu sehen, dass zur Bereitstellung eines Kompressors, dessen zweites Verdichtungsvolumen dem ersten Verdichtungsvolumen zugeschaltet werden kann, ausschließlich Standardbauteile, die preiswert verfügbar sind, verwendet werden. Ein weiterer Vorteil der Weiterbildung ist darin zu sehen, dass das erste Verdichtungsvolumen und das zweite Verdichtungsvolumen jeweils über eine unabhängige Auslassleitung verfügen. Somit ist es möglich, dass mit Hilfe des ersten Verdichtungsvolumen andere Verbraucher der Niveauregelanlage mit Druckluft befüllt werden als mit dem zweiten Verdichtungsvolumen. Beispielsweise ist es möglich, die Auslassleitung des ersten Verdichtungsvolumens mit Verbrauchern zu verbinden, die nur einen geringen Luftmengenbedarf haben und die Auslassleitung des zweiten Verdichtungsvolumens mit Verbrauchern zu verbinden, die einen hohen Luftmengenbedarf haben.

Gemäß einer Weiterbildung der Erfindung nach Anspruch 3 sind die steuerbaren Wegventile elektrisch steuerbar ausgebildet. Der Vorteil dieser Weiterbildung ist darin zu sehen, dass die Wegeventile bei jedem Druck in der Niveauregelanlage geschaltet werden können und somit das zweite Verdichtungsvolumen bei einem beliebigen Druck in der geschlossenen Niveauregelanlage abgeschaltet bzw. dem ersten Verdichtungsvolumen zugeschaltet werden kann.

Gemäß einer Weiterbildung der Erfindung nach Anspruch 4 ist die zweite Auslassleitung an die erste Auslassleitung angeschlossen. Der Vorteil dieser Weiterbildung ist darin zu sehen, dass in der Niveauregelanlage über weite Strecken nur eine einzige Auslassleitung zur Verfügung gestellt zu werden braucht.

Gemäß einer Weiterbildung der Erfindung nach Anspruch 5 sind das erste steuerbare Wegeventil und das zweite steuerbare Wegeventil in einem einzigen steuerbaren 3/2 Wegeventil zusammengefasst, wobei die zweite Auslassleitung und die erste Saugraumleitung bis zu dem 3/2 Wegeventil gemeinsam verlaufen. Der Vorteil dieser Weiterbildung ist darin zu sehen, dass nur ein einziges steuerbares Wegeventil zur Verfügung gestellt zu werden braucht.

Gemäß einer Weiterbildung der Erfindung nach Anspruch 6 ist das erste Verdichtungsvolumen abschalt- und zuschaltbar. Der Vorteil dieser Weiterbildung ist darin zu sehen, dass beide Verdichtungsvolumina des Kompressors separat abschaltbar und zuschaltbar sind. Somit besteht die Möglichkeit, Druckluft ausschließlich über das erste Verdichtungsvolumen oder ausschließlich über das zweite Verdichtungsvolumen oder mit beiden Verdichtungsvolumina gemeinsam in die Verbraucher der Niveauregelanlage zu fördern. Es bestehen also 3 Möglichkeiten, Druckluft in die Verbraucher der Niveauregelanlage zu überführen, wobei in Abhängigkeit von dem Verbraucher und den Druckverhältnissen in der Niveauregelanlage eine geeignete Möglichkeit ausgewählt werden kann.

Eine Weiterbildung der Erfindung gemäß Anspruch 7 ist dadurch gekennzeichnet, dass
- eine zweite Saugraumleitung vorhanden ist, die einerseits an das erste Verdichtungsvolumen angeschlossen ist, und andererseits an den Saugraum angeschlossen ist, wobei die zweite Saugraumleitung durch ein drittes steuerbares Wegeventil durchgeschaltet oder gesperrt werden kann,
- in der ersten Auslassleitung ein viertes steuerbares Wegeventil liegt, mit der die erste Auslassleitung durchgeschaltet oder gesperrt werden kann, wobei die zweite Auslassleitung hinter dem vierten Wegeventil an die erste Auslassleitung angeschlossen ist, und
- wobei das dritte und das vierte steuerbare Wegeventil so gesteuert werden, dass die erste Auslassleitung gesperrt ist, wenn die zweite Saugraumleitung durchgeschaltet ist bzw. die erste Auslassleitung durchgeschaltet ist, wenn die zweite Saugraumleitung gesperrt ist.

Der Vorteil dieser Weiterbildung ist darin zu sehen, dass die Abschaltbarkeit und Zuschaltbarkeit des ersten Verdichtungsvolumens ausschließlich mit preiswerten Standardbauteilen realisiert ist.

Gemäß einer Weiterbildung der Erfindung nach Anspruch 8 sind das dritte steuerbare Wegeventil und das vierte steuerbare Wegeventil in einem einzigen steuerbaren 3/2 Wegeventil zusammengefasst, wobei die erste Auslassleitung und die zweite Saugraumleitung bis zu dem 3/2 Wegeventil gemeinsam verlaufen. Vorzugsweise ist das steuerbare 3/2 Wegeventil elektrisch steuerbar ausgebildet. Der Vorteil dieser Weiterbildung ist darin zu sehen, dass zur Durchschaltung bzw. Sperrung der ersten Auslassleitung und der zweiten Saugraumleitung nur ein einziges Wegeventil bereitgestellt zu werden braucht.

Gemäß einer Weiterbildung der Erfindung nach Anspruch 9 ist das erste Verdichtungsvolumen wesentlich kleiner als das zweite Verdichtungsvolumen. Der Vorteil dieser Weiterbildung ist darin zu sehen, dass der Kompressor der Niveauregelanlage vielseitig eingesetzt werden kann. So kann ausschließlich das erste Verdichtungsvolumen genutzt werden, wenn in dem Saugraum ein hoher Luftdruck vorliegt. In diesem Fall ist die Leistungsaufnahme des Kompressors aufgrund des kleinen ersten Verdichtungsvolumens gering. Für den Fall, dass in dem Saugraum ein kleiner Luftdruck vorliegt und große Luftmengen gefördert werden sollen, können daserste und das zweite Verdichtungsvolumen eingeschaltet und für die Förderung von Druckluft genutzt werden. Aufgrund des geringen Luftdrucks in dem Saugraum des Kompressors ist dessen Leistungsaufnahme dabei gering. Für den Fall, dass in dem Saugraum ein mittlerer Luftdruck vorliegt und große Luftmengen gefördert werden sollen, kann dies ausschließlich mit Hilfe des zweiten Verdichtungsvolumens geschehen. In diesem Fall ist das erste Verdichtungsvolumen abgeschaltet und die Leistungsaufnahme des Kompressors begrenzt, da dieser nur mit einem Verdichtungsvolumen betrieben wird.

Gemäß einer Weiterbildung der Erfindung nach Anspruch 10 werden der erste und der zweite Kolben von einem einzigen Motor über eine gemeinsame Kurbelwelle angetrieben. Der Vorteil dieser Weiterbildung ist darin zu sehen, dass der Kompressor wenige Bauteile aufweist und somit preiswert ist.

Gemäß einer Weiterbildung der Erfindung nach Anspruch 11 durchlaufen der erste und der zweite Kolben bei einer Umdrehung der Kurbelwelle unterschiedlich lange Hubwege. Der Vorteil dieser Weiterbildung ist darin zu sehen, dass die Verdichtungsvolumina über den Hubweg der Kolben unterschiedlich gestaltet werden können und somit zwei identische Kolben. (die als Standardbauteile zur Verfügung gestellt werden können) verwendet werden können.

Gemäß einer Weiterbildung der Erfindung nach Anspruch 12 sind der erste und der zweite Kolben jeweils über eine Pleuelstange und Pleuellager mit der Kurbelwelle verbunden, wobei die Längsachse des ersten Pleuellagers zur Längsachse der Kurbelwelle parallel verschoben ist und wobei die Längsachse des zweiten Pleuellagers in einer Linie mit der Längsachse der Kurbelwelle verläuft. Durch die Weiterbildung gemäß Anspruch 12 ist eine einfache Ausbildung unterschiedlicher Hubwege des ersten und des zweiten Kolbens möglich.

Ein Ausführungsbeispiel und weitere Vorteile der Erfindung werden im Zusammenhang mit den nachstehenden Figuren erläutert, darin zeigt:
- Fig. 1: einen Kompressor für eine geschlossene Niveauregelanlage in schematischer Darstellung,
- Fig. 2: eine geschlossene Niveauregelanlage,
- Fig. 3: eine geschlossene Niveauregelanlage,
- Fig. 4: einen Kompressor im Detail.

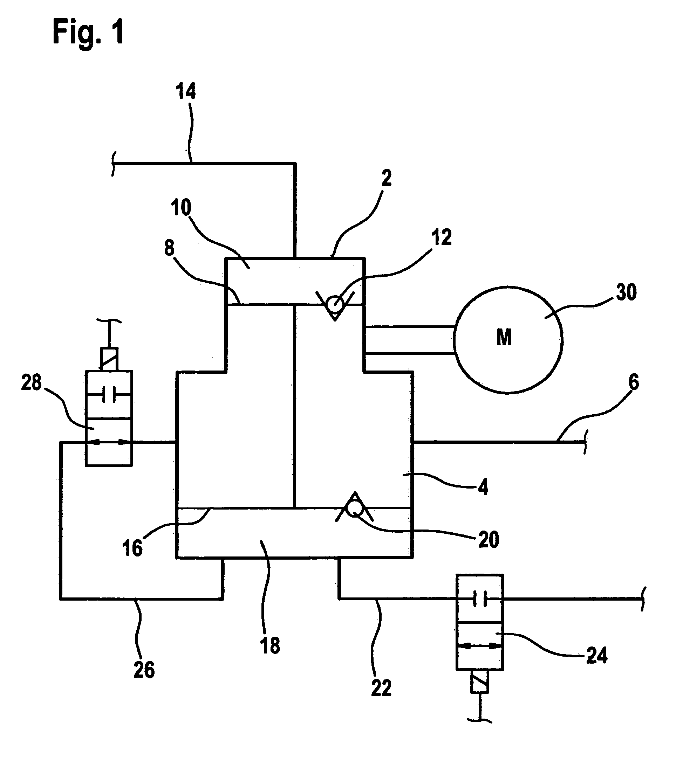

Fig. 1 zeigt einen Kompressor 2 für eine geschlossene Niveauregelanlage in schematischer Darstellung. Der Kompressor weist einen Saugraum 4 auf, an den eine Einlassleitung 6 angeschlossen ist. Der Kompressor 2 weist ferner einen ersten Kolben 8 und ein erstes Verdichtungsvo lumen 10, das durch den ersten Kolben 8 von dem Saugraum 4 getrennt ist und über ein erstes Rückschlagventil 12, das zum Verdichtungsvolumen 10 hin öffnet, mit dem Saugraum 4 verbindbar ist. Eine erste Auslassleitung 14 des Kompressors 2 ist einerseits an das erste Verdichtungsvolumen 10 angeschlossen und andererseits an unterschiedliche Verbraucher (die in die Fig. 1 nicht gezeigt sind) anschließbar.

Zusätzlich zu den bisher genannten Bestandteilen weist der Kompressor 2 einen zweiten Kolben 16 und ein zweites Verdichtungsvolumen 18 auf, das durch den zweiten Kolben 16 von dem Saugraum 4 getrennt ist und über ein zweites Rückschlagventil 20, das zum zweiten Verdichtungsvolumen 18 hin öffnet, mit dem Saugraum 4 verbindbar ist. An das zweite Verdichtungsvolumen 18 ist eine zweite Auslassleitung 22 angeschlossen, in der ein steuerbares Wegeventil 24 liegt, mit dessen Hilfe die zweite Auslassleitung 22 durchgeschaltet oder gesperrt werden kann. Das zweite Verdichtungsvolumen 18 ist über die zweite Auslassleitung 22 mit unterschiedlichen Verbrauchern verbindbar, die in der Fig. 1 nicht gezeigt sind. Neben den bisher genannten Bestandteilen weist der Kompressor 2 eine erste Saugraumleitung 26 auf, die einerseits an das zweite Verdichtungsvolumen 18 und andererseits an den Saugraum 4 angeschlossen ist, wobei die erste Saugraumleitung 26 durch ein zweites steuerbares Ventil 28 durchgeschaltet oder gesperrt werden kann.

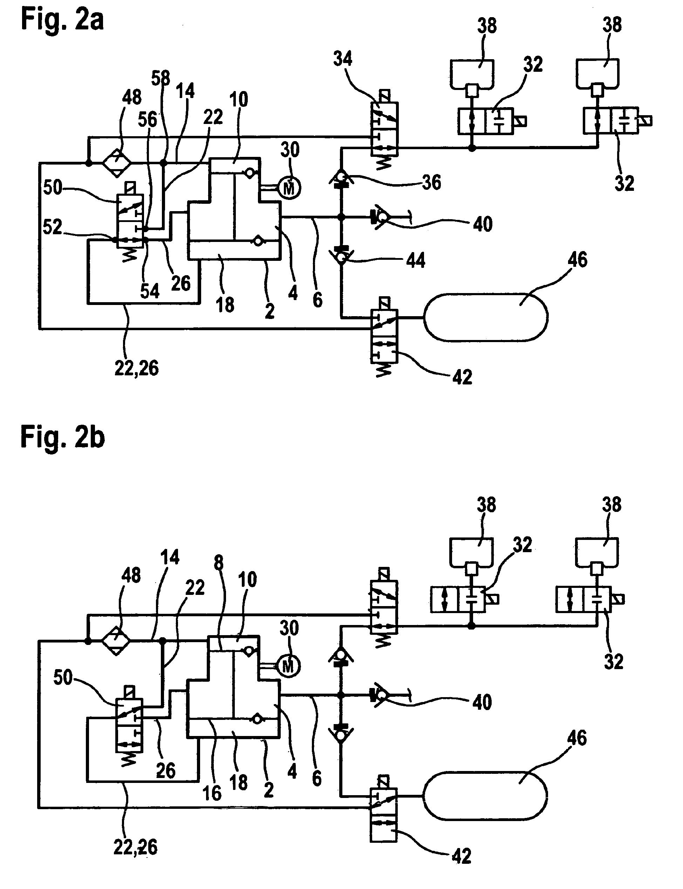

Der in der Fig. 1 gezeigte Kompressor 2 ist so ausgebildet, dass das zweite Verdichtungsvolumen 18 abschaltbar und zu dem ersten Verdichtungsvolumen 10 zuschaltbar ist. Im Folgenden wird erläutert, wie das zweite Verdichtungsvolumen 18 abgeschaltet werden kann: Zum Abschalten des zweiten Verdichtungsvolumens werden die elektrisch steuerbaren Ventile 24 und 28 von der Steuereinheit der Niveauregelanlage (nicht gezeigt) in die in der Fig. 1 gezeigten Schaltzustände überführt. Das steuerbare Ventil 24 wird also in einen Schaltzustand überführt, in dem es die zweite Auslassleitung 22 sperrt und das steuerbare Wegeventil 28 wird in einen Zustand überrührt, in dem es die erste Saugraumleitung 26 durchschaltet. Wenn in diesem Zustand der Ventile 24 und 28 der Motor 30 des Kompressors 2 von der Steuereinheit angesteuert wird, werden die Kolben 8 und 16 auf- und ab bewegt. Bei einer Abwärtsbewegung des ersten Kolbens 8 gelangt hierbei Druckluft aus dem Saugraum 4 über das erste Rückschlagventil 12 in das Verdichtungsvolumen 10. Bei einer Aufwärtsbewegung des ersten Kolbens 8 wird die Druckluft in dem ersten Verdichtungsvolumen verdichtet und in die erste Auslassleitung überführt. Von der ersten Auslassleitung gelangt die Druckluft in die gewünschten Verbraucher der Niveauregelanlage (näheres, siehe auch Fig. 2).

Bei einer Aufwärtsbewegung des zweiten Kolbens 16 gelangt Druckluft aus dem Saugraum 4 über das zweite Rückschlagventil 20 in das zweite Verdichtungsvolumen 18. Bei einer Abwärtsbewegung des zweiten Kolbens 16 wird die Druckluft über die durchgeschaltete erste Saugraumleitung 26 in den Saugraum 4 zurückgeführt. Zwischen dem zweiten Verdichtungsvolumen 18 und dem Saugraum 4 wird also über die erste Saugraumleitung 26 ein Druckausgleich bzw. Druckgleichgewicht hergestellt. Der zweite Kolben 16 verrichtet bei seiner Auf- und Abwärtsbewegung also keine Arbeit gegen den Druck in dem Saugraum 4 und läuft somit mit einem geringen Leistungsbedarf mit. In die zweite Auslassleitung 22 wird hierbei nur ein geringer Teil der Druckluft überführt, da diese durch das Ventil 24 gesperrt ist.

Bei dem in der Fig. 1 gezeigten Zustand der Ventile 24 und 28 ist das erste Verdichtungsvolumen also abgeschaltet und stellt keine Druckluft für die Verbraucher der geschlossenen Niveauregelanlage zur Verfügung. Vielmehr werden die Verbraucher der geschlossenen Niveauregelanlage ausschließlich über das erste Verdichtungsvolumen 10 und über die erste Auslassleitung 14 mit Druckluft befüllt. Vorzugsweise ist das erste Verdichtungsvolumen 10 wesentlich kleiner ausgerührt als das zweite Verdichtungsvolumen 18. Der in der Fig. 1 gezeigte Schaltzustand der Ventile 24 und 28 wird von der Steuereinheit der Niveauregelanlage insbesondere dann eingestellt, wenn in dem Saugraum 4 ein hoher Luftdruck herrscht. In der gezeigten Stellung der Ventile 24 und 26 braucht nämlich nur der erste Kolben 8 Arbeit gegen hohen Druck in dem Saugraum 4 zu verrichten. Der zweite Kolben 16 braucht hingegen beim Ansaugen von Druckluft über das Rückschlagventil 20 in den Verdichtungsraum 18 nur eine geringe Arbeit zu verrichten.

Im Folgenden wird erläutert, wie das zweite Verdichtungsvolumen 18 dem ersten Verdichtungsvolumen 10 zugeschaltet wird. Dazu werden von der Steuereinheit der geschlossenen Niveauregelanlage die Wegeventile 24 und 28 angesteuert, so dass diese von dem in der Fig. 1 gezeigten Schaltzustand in den anderen Schaltzustand übergehen. In diesem Fall ist die zweite Auslassleitung 22 durchgeschaltet und die erste Saugraumleitung 26 gesperrt. Da die erste Saugraumleitung 26 gesperrt ist, findet kein Druckausgleich mehr zwischen dem zweiten Verdichtungsvolumen 18 und dem Saugraum 4 statt. Bei einer Ansteuerung des Motors 30 durch die Steuereinheit der Niveauregelanlage bewegen sich der erste Kolben 8 und der zweite Kolben 16 wiederum auf und ab. Hierbei wird sowohl von dem ersten Kolben 8 Druckluft in dem ersten Verdichtungsvolumen 10 verdichtet und in die erste Auslassleitung 14 überführt. Darüber hinaus wird auch bei einer Aufwärtsbewegung des zweiten Kolbens 16 Druckluft in dem zweiten Verdichtungsvolumen 18 verdichtet und in die zweite Auslassleitung 24 überführt. Über die erste Auslassleitung 14 und über die zweite Auslassleitung 22 gelangt die Druckluft in Verbraucher der Niveauregelanlage. Es kann dann also eine besonders große Luftmenge in die Verbraucher der Niveauregelanlage überführt werden. Das zweite Verdichtungsvolumen 18 wird dem ersten Verdichtungsvolumen 10 insbesondere dann zugeschaltet, wenn in dem Saugraum 4 ein kleiner Druck vorliegt und wenn in die geschlossene Niveauregelanlage eine große Luftmenge überführt werden muss. Dies ist beispielsweise dann der Fall, wenn der Druckluftspeicher der Niveauregelanlage (siehe auch Fig. 2) aus der Atmosphäre mit Druckluft befüllt werden muss. Solange der Druck in dem Saugraum 4 klein ist, hat der Kompressor 2 nur eine geringe Leistungsaufnahme, da sowohl der erste Kolben 8 als auch der zweite Kolben 16 beim Ansaugen nur gegen einen geringen Luftdruck zu arbeiten brauchen.

Fig. 2a zeigt eine geschlossene Niveauregelanlage mit einem Kompressor gemäß Fig. 1 in schematischer Darstellung. Die Einlassleitung 6 des Kompressors 2 ist über die steuerbaren Wegeventile 32, 34 und das Rückschlagventil 36 mit den Luftfedern 38 verbindbar. Die Einlassleitung 6 und damit der Saugraum 4 des Kompressors 2 ist über das Rückschlagventil 40 mit der Atmosphäre verbindbar. Schließlich ist die Einlassleitung 6 über das steuerbare Wegeventil 42 und das Rückschlagventil mit dem Druckluftspeicher 46 der Niveauregelanlage verbindbar. Die Rückschlagventile 36, 40 und 44 sind hierbei so ausgebildet, dass sie in Richtung der Einlassleitung 6 bzw. in Richtung des Saugraums 4 öffnen.

Die erste Auslassleitung 14 des Kompressors 2 kann über den Lufttrockner 48 und die steuerbaren Ventile 34 und 32 mit den Luftfedern 38 verbunden werden. Die zweite Auslassleitung 14 kann ebenfalls über den Lufttrockner und das steuerbare Regelventil 42 mit dem Druckluftspeicher 46 verbunden werden.

Mit Hilfe der in der Fig. 2a gezeigten geschlossenen Niveauregelanlage kann in sich bekannter Art und Weise Druckluft aus dem Druckluftspeicher 46 über den Kompressor 2 in die Luftfedern 38 überführt werden. Darüber hinaus kann in umgekehrter Richtung Druckluft aus den Luftfedern 38 über den Kompressor 2 in den Druckluftspeicher 46 überführt werden. Schließlich ist es möglich, aus der Atmosphäre über das Rückschlagventil 40, über den Kompressor 2 und den Lufttrockner 48 Druckluft in den Druckluftspeicher zu überführen. Diese Funktionen in einer geschlossenen Niveauregelanlage sind seit langem, z.B. aus der EP 1 243 447 B1, bekannt und sollen daher hier nicht näher erläutert werden.

Bei dem in der Fig. 2a gezeigten Kompressor 2 sind die elektrisch steuerbaren Wegeventile 24 und 28, die in der Fig. 1 gezeigt sind, in einem einzigen elektrisch steuerbaren 3/2 Wegeventil zusammengefasst. Darüber hinaus verlaufen die erste Saugraumleitung 26 und die zweite Auslassleitung 22 ausgehend von dem zweiten Verdichtungsvolumen 18 bis zu dem ersten Anschluss 52 des 3/2 Wegeventil 50 gemeinsam.

Hinter dem 3/2 Wegeventil 50 ist die erste Saugraumleitung 26 an dem zweiten Anschluss 54 des 3/2 Wegeventil 50 und die zweite Auslassleitung 22 an dem dritten Anschluss 56 des 3/2 Wegeventils 50 angeschlossen. Ausgehend von dem dritten Anschluss 56 wird die zweite Auslassleitung 22 in einem Punkt 58 auf die erste Auslassleitung 14 geführt, wobei der Punkt 58 zwischen dem Ausgang des ersten Verdichtungsvolumens 10 und dem Lufttrockner 48 liegt. Bei dem in der Fig. 2a gezeigten Schaltzustand des elektrisch steuerbaren Dreiwegeventils 50 ist das zweite Verdichtungsvolumen 18 über die erste Saugraumleitung 26 mit dem Saugraum 4 verbunden. Zwischen dem ersten Verdichtungsvolumen 18 und dem Saugraum 4 des Kompressors 2 stellt sich also ein Druckgleichgewicht ein. Wenn also von der Steuereinheit der geschlossenen Niveauregulieranlage der Motor 30 angesteuert wird, wird ausschließlich von dem ersten Verdichtungsvolumen 10 Druckluft in die erste Auslassleitung 14 überführt. Bei den in der Fig. 2 gezeigten Schaltzuständen der Ventile wird ausgehend von den Luftfedern 38 über die Ventile 32, 34 und 36 Druckluft in den Saugraum 4 überführt. Ausgehend von dem Saugraum 4 des Kompressors 2 wird Druckluft über das erste Verdichtungsvolumen 10; die erste Auslassleitung 14, den Lufttrockner 48 und das elektrisch steuerbare Ventil 42 in den Druckluftspeicher 46 überführt. Bei der Überführung von Druckluft aus den Luftfedern 38 in den gefüllten Druckluftspeicher 46 ist ausschließlich das erste Verdichtungsvolumen beteiligt.

In der Fig. 2b ist die gleiche geschlossene Niveauregulieranlage wie in der Fig. 2a gezeigt, jedoch mit dem Unterschied, dass das elektrisch steuerbare 3/2 Wegeventil 50 von der Steuereinheit der Niveauregulieranlage von dem in der Fig. 2a gezeigten ersten Schaltzustand in den in der Fig. 2b zweiten Schaltzustand überführt worden ist. In diesem Schaltzustand des 3/2 Wegeventils 50 ist die erste Saugraumleitung 26 gesperrt und die zweite Auslassleitung 22 durchgeschaltet. Dies bedeutet, dass das zweite Verdichtungsvolumen 18 dem ersten Verdichtungsvolumen 10 zugeschaltet ist.

Zusätzlich zu dem 3/2 Wegeventil 50 sind auch die elektrisch steuerbaren Wegeventil 32 von der Steuereinheit der Niveauregulieranlage von dem in der Fig. 2a gezeigten Zustand, in dem in der Fig. 2b gezeigtem Zustand überführt worden, wodurch die Druckleitung zu den Luftfedern 38 gesperrt ist. Wenn in dem gezeigten Zustand der steuerbaren Wegeventile von der Steuereinheit der Niveauregulieranlage der Motor 30 des Kompressors 2 angesteuert wird, wird über das Rückschlagventil 40 und die Einlassleitung 6 Druckluft aus der Atmosphäre in den Saugraum 4 des Kompressors 2 überführt. Ausgehend von dem Saugraum 4 wird bei einer Aufwärtsbewegung des ersten Kolbens 8 Druckluft in die erste Auslassleitung 14 und von dort über den Lufttrockner 48 und das steuerbare Wegeventil 42 in den Druckluftspeicher 46 überführt. Bei einer Abwärtsbewegung des zweiten Kolbens 16 wird Druckluft aus dem Saugraum 4 in die zweite Auslassleitung 22 und über das steuerbare Wegeventil 50 in die erste Auslassleitung 14 überführt. Von dort wird die Druckluft wie eben beschrieben in den Druckluftspeicher 46 überführt. Die Beschickung der ersten Auslassleitung 14 mit Druckluft erfolgt also abwechselnd und unabhängig voneinander durch das erste Verdichtungsvolumen 10 bzw. durch das zweite Verdichtungsvolumen 18. Da beiden Verdichtungsvolumina 10 und 18 an der Förderung von Druckluft beteiligt sind, wird von dem Kompressor 2 die maximalverfügbare Druckluft gefördert. Von der Zuschaltung des zweiten Verdichtungsvolumens 18 zu dem ersten Verdichtungsvolumen 10 wird vorzugsweise gebrauch gemacht, wenn der Druck in dem Saugraum 4 niedrig ist. Dies ist im gewählten Beispiel der Fall, da der Druckluftspeicher 46 aus der Atmosphäre aufgefüllt wird. In dem Saugraum 4 herrscht also lediglich Atmosphäreluftdruck.

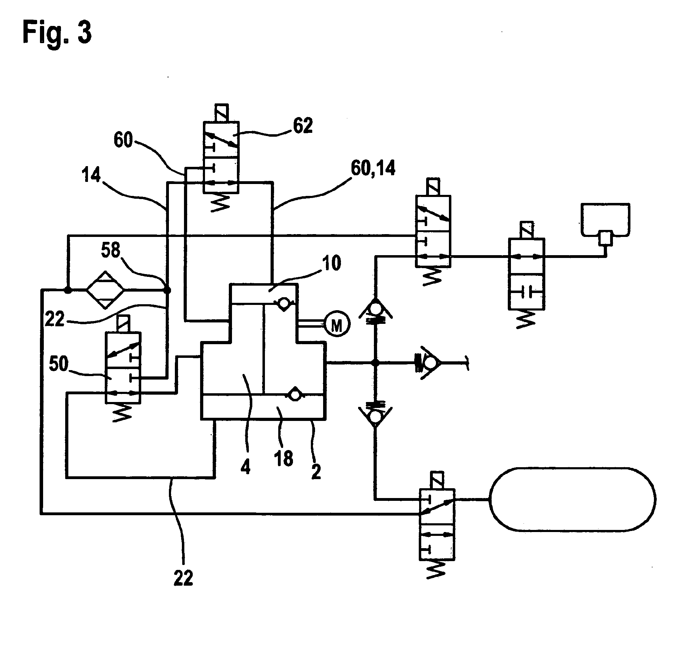

Fig.3 zeigt eine geschlossene Niveauregelanlage, die weitestgehend genauso ausgebildet ist wie die in der Fig.2 gezeigte Niveauregelanlage. Der einzige Unterschied ist darin zu sehen, dass bei dem Kompressor 2 nicht nur das zweite Verdichtungsvolumen 18 abschaltbar und zuschaltbar ist, sondern darüber hinaus auch das erste Verdichtungsvolumen 10 abschaltbar und zuschaltbar ist. Dazu ist eine zweite Saugraumleitung 60 vorhanden, die einerseits an das erste Verdichtungsvolumen 10 angeschlossen ist und andererseits an den Saugraum 4 angeschlossen ist, wobei die zweite Saugraumleitung 60 durch das elektrisch steuerbare 3/2 Wegeventil 62 gesperrt (sowie in der Fig.3 gezeigt) oder durchgeschaltet werden kann. Darüber hinaus kann mit Hilfe des elektrisch steuerbaren 3/2 Wegeventils 62 auch die erste Auslassleitung 14 gesperrt oder durchgeschaltet (wie in der Fig.3 gezeigt) werden. Bei dem in der Fig. 3 gezeigten Ausführungsbeispiel des Kompressors 2 wird die zweite Auslassleitung 22 in einem Punkt 58 auf die erste Auslassleitung 14 geführt, der hinter dem 3/2 Wegeventil 62 liegt (dies bedeutet, dass das 3/2 Wegeventil 62 zwischen dem Punkt 58 und dem Kompressor 2 in der ersten Auslassleitung 14 liegt). Dies hat zur Folge, dass ausgehend von dem Kompressor 2 zu dem Punkt 58 entweder Druckluft aus dem ersten Verdichtungsvolumen 10 über die erste Auslassleitung 14 oder ausgehend von dem zweiten Verdichtungsvolumen 18 über die zweite Auslassleitung 22 oder ausgehend von beiden Verdichtungsvolumina 10 und 18 abwechselnd und unabhängig voneinander geführt werden kann.

Bei dem in der Fig. 3 gezeigten Ausführungsbeispiel ist die erste Auslassleitung 14 durchgeschaltet und die zweite Auslassleitung 22 gesperrt. Dies bedeutet, dass an der Pumpleistung des Kompressors 2 ausschließlich das erste Verdichtungsvolumen 10 teilnimmt. Wenn von der Steuereinheit der geschlossenen Niveauregelanlage das steuerbare 3/2 Wegeventil 50 von dem in der Fig. 3 gezeigten Zustand in den anderen Schaltzustand überführt wird, sind beide Auslassleitungen 14 und 22 durchgeschaltet, so dass beide Verdichtungsvolumina 10, 18 an der Pumpleistung des Kompressors 2 teilnehmen. Wird von der Steuereinheit der Niveauregelanlage sowohl das Wegeventil 50 als auch Wegeventil 62 von dem in der Fig. 3 gezeigten Schaltzustand in den anderen Schaltzustand überführt, so ist die erste Auslassleitung 14 gesperrt und die zweite Auslassleitung 22 durchgeschaltet. Dies führt dazu, dass ausschließlich das zweite Verdichtungsvolumen an der Pumpleistung des Kompressors 2 teilnimmt. Aufgrund der Tatsache, dass die Verdichtungsvolumina 10, 18 des Kompressors unabhängig voneinander betätigt werden können, können also mit dem Kompressor 3 verschiedene Pumpleistungen realisiert werden.

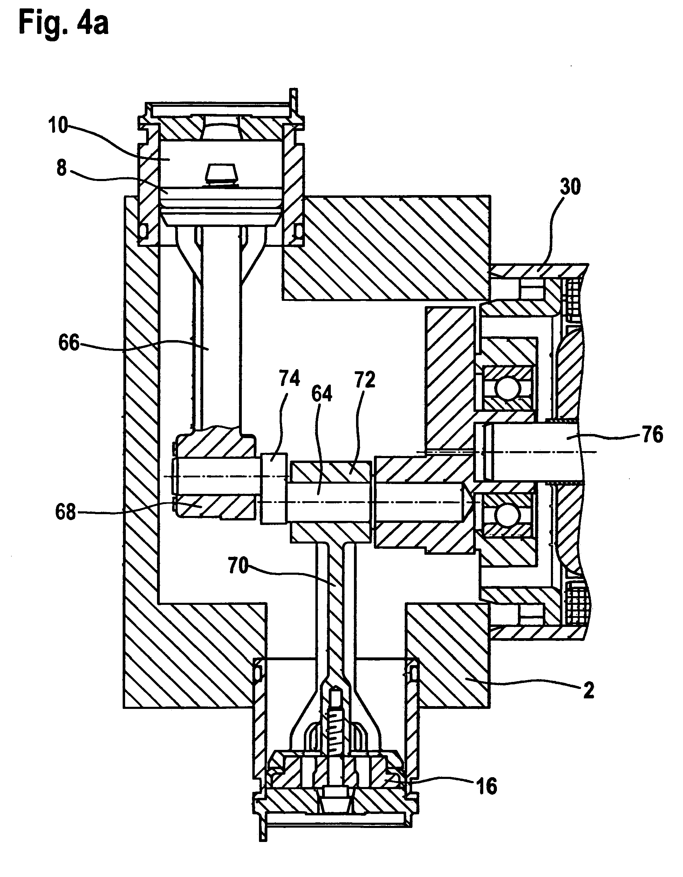

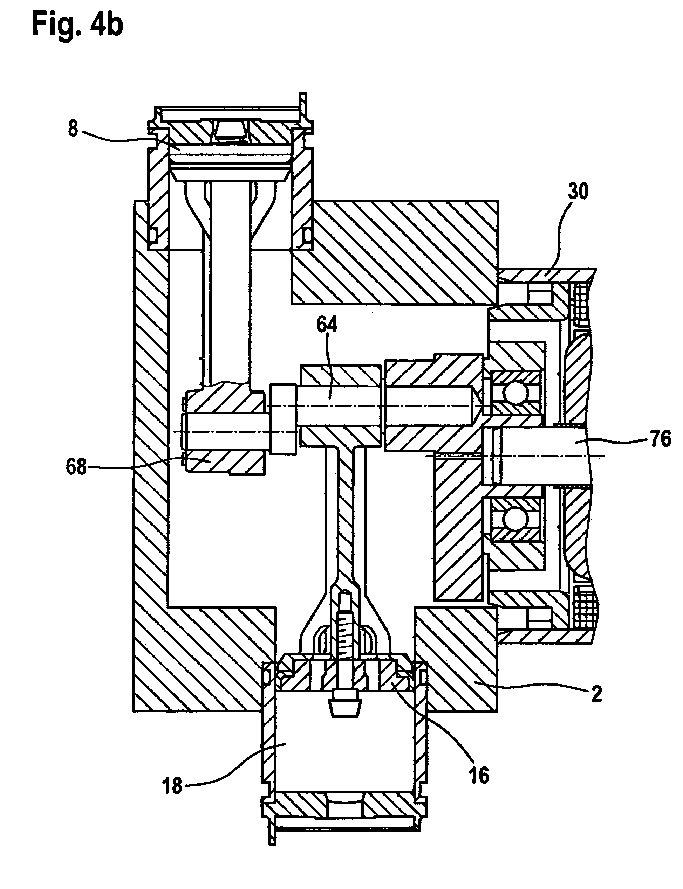

Fig. 4 zeigt den inneren Aufbau des Kompressors 2. Der Fig. 4a ist zu entnehmen, dass der Motor 30 des Kompressors 2 eine einzige Kurbelwelle 64 antreibt. Der erste Kolben 8 ist über eine Pleuelstange 66 und über ein Pleuellager 68 mit der Kurbelwelle 64 verbunden. Der zweite Kolben 16 ist über eine Pleuelstange 70 und ein Pleuellager 72 ebenfalls mit der Kurbelwelle 64 verbunden. Die Längsachse des Pleuellagers 68 ist zur Längsachse der Kurbelwelle 64 mit Hilfe eines Versatzstückes 74 parallel in Richtung der Motorwelle 76 des Motors 30 verschoben. Die Längsachse des Pleuellagers 72 verläuft hingegen in einer Linie mit der Längsachse der Kurbelwelle 64. Die Kolben 8, 16 sind in dem Kompressor 2 um 180° phasenverschoben angeordnet, d.h., wenn der Kolben 8 in seinem unteren Todpunkt steht, steht der Kolben 16 in seinem oberen Todpunkt und umgekehrt. Dies führt dazu, dass von den Verdichtungsvolumina 10, 18 (s. Fig. 1bis 3) abwechselnd Druckluft in die Verbraucher der Niveauregelanlage überführt wird, wenn das zweite Verdichtungsvolumen 18 dem ersten Verdichtungsvolumen 10 zugeschaltet ist. In der Fig. 4a ist der erste Kolben 8 in seinem unteren Todpunkt und der zweite Kolben 16 in seinem oberen Todpunkt gezeigt.

Fig. 4b zeigt weitestgehend das gleiche wie Fig.4a. Der einzige Unterschied ist darin zu sehen, dass sich die Motorwelle 76 des Motors 30 und damit die Kurbelwelle 64 um 180° gedreht haben. Dies führt dazu, dass sich der erste Kolben 8 in seinem oberen Todpunkt und der zweite Kolben 16 in seinem unteren Todpunkt befmden. Den Figuren 4a und 4b ist zu entnehmen, dass der Hubweg des ersten Kolbens 8 kleiner ist als der Hubweg des zweiten Kolbens 16. Die Verkleinerung des Hubweges wird dadurch erreicht, dass die Längsachse des Pleuellagers 68 des ersten Kolbens 8 zur Längsachse der Kurbelwelle 64 um den Betrag d parallel verschoben ist. Der Hubweg des Kolbens 8 ist also um den Betrag 2d kleiner der Hubweg des Kolbens. Da die beiden Kolben 8 und 16 die gleiche Grundfläche haben, führt dies dazu, dass das erste Verdichtungsvolumen 10 wesentlich kleiner ist als das zweite Verdichtungsvolumen 18.

Es ist ebenfalls möglich, die Grundflächen der beiden Kolben 8 und 16 unterschiedlich auszubilden, um die Spreizung der Verdichtungsvolumina 10,18 weiter zu vergrößern.

### Bezugszeichenliste

### (Teil der Beschreibung)

- 2: Kompressor
- 4: Saugraum
- 6: Einlassleitung
- 8: erster Kolben
- 10: erstes Verdichtungsvolumen
- 12: erstes Rückschlagventil
- 14: erste Auslassleitung
- 16: zweiter Kolben
- 18: zweites Verdichtungsvolumen
- 20: zweites Rückschlagventil
- 22: zweite Auslassleitung
- 24: erstes steuerbares Ventil
- 26: erste Saugraumleitung
- 28: zweites steuerbares Ventil
- 30: Motor
- 32: steuerbares Ventil
- 34: steuerbares Ventil
- 36: Rückschlagventil
- 38: Luftfeder
- 40: Rückschlagventil
- 42: steuerbares Ventil
- 44: Rückschlagventil
- 46: Druckluftspeicher
- 48: Lufttrockner
- 50: 3/2 Wegeventil
- 52: erster Anschluss des 3/2 Wegeventils 50
- 54: zweiter Anschluss des 3/2 Wegeventils 50
- 56: dritter Anschluss des 3/2 Wegeventils 50
- 58: Punkt
- 60: zweite Saugraumleitung
- 62: 3/2 Wegeventil
- 64: Kurbelwelle
- 66: Pleuelstange
- 68: Pleuellager
- 70: Pleuelstange
- 72: Pleuellager
- 74: Versatzstück
- 76: Motorwelle

## Patentansprüche

1. Geschlossene Niveauregelanlage für ein Fahrzeug, die Luftfedern (38), einen Druckluftspeicher (46), und einen Kompressor (2) mit
- einem Saugraum (4), der an eine Einlassleitung (6) angeschlossen ist
- einem ersten Kolben (8),
- einem ersten Verdichtungsvolumen (10), das durch den ersten Kolben (8) von dem Saugraum (4) getrennt ist und über ein erstes Rückschlagventil (12), das zum ersten Verdichtungsvolumen (10) hin öffnet, mit dem Saugraum (4) verbindbar ist,
- eine erste Auslassleitung (14), die einerseits an das erste Verdichtungsvolumen (10) angeschlossen ist, und andererseits an unterschiedliche Verbraucher, insbesondere an die Luftfedern (38) oder an den Druckluftspeicher (46), anschließbar ist,
- einem zweiten Kolben (16),
- einem zweiten Verdichtungsvolumen (18)
enthält, **dadurch gekennzeichnet, dass**
- das zweite Verdichtungsvolumen (18) durch den zweiten Kolben (16) von dem Saugraum (4) getrennt ist und über ein zweites Rückschlagventil (20), das zum zweiten Verdichtungsvolumen (18) hin öffnet, mit dem Saugraum (4) verbindbar ist,
und dass
- das zweite Verdichtungsvolumen (18) abschaltbar und zuschaltbar ist, wobei das erste Verdichtungsvolumen (10) und das zweite Verdichtungsvolumen (18) unabhängig voneinander Druckluft in die Verbraucher überführen, wenn das zweite Verdichtungsvolumen (18) dem ersten Verdichtungsvolumen (10) zugeschaltet ist.

2. Geschlossene Niveauregelanlage nach Anspruch 1, **dadurch gekennzeichnet, dass** der Kompressor (2) zusätzlich folgende Bestandteile aufweist:
- eine zweite Auslassleitung (22), die einerseits an das zweite Verdichtungsvolumen (18) angeschlossen ist, und andererseits an unterschiedliche Verbraucher anschließbar ist, wobei die zweite Auslassleitung (22) durch ein erstes steuerbares Ventil (24) durchgeschaltet oder gesperrt werden kann,
- eine erste Saugraumleitung (26), die einerseits an das zweite Verdichtungsvolumen (18) angeschlossen ist, und andererseits an den Saugraum (4) angeschlossen ist, wobei die erste Saugraumleitung (26) durch ein zweites steuerbares Ventil (28) durchgeschaltet oder gesperrt werden kann,
- wobei das erste (24) und das zweite steuerbare Wegeventil (28) so gesteuert werden, dass die zweite Auslassleitung (22) gesperrt ist, wenn die erste Saugraumleitung (26) durchgeschaltet ist bzw. die zweite Auslassleitung (22) durchgeschaltet ist, wenn die erste Saugraumleitung (26) gesperrt ist.

3. Geschlossene Niveauregelanlage nach Anspruch 2, **dadurch gekennzeichnet, dass** die steuerbaren Wegeventile (24, 28) elektrisch steuerbar sind.

4. Geschlossene Niveauregelanlage nach einem der Ansprüche 2 bis 3, **dadurch gekennzeichnet, dass** die zweite Auslassleitung (22) an die erste Auslassleitung (14) angeschlossen ist.

5. Geschlossene Niveauregelanlage nach einem der Ansprüche 2 bis 4, **dadurch gekennzeichnet, dass** das erste steuerbare Wegeventil (24) und das zweite steuerbare Wegeventil (28) in einem einzigen steuerbaren 3/2 Wegeventil zusammengefasst sind und die zweite Auslassleitung (22) und die erste Saugraumleitung (26) bis zu dem 3/2 Wegeventil gemeinsam verlaufen.

6. Geschlossene Niveauregelanlage nach einem der Ansprüche 1 bis 5, **dadurch gekennzeichnet, dass** das erste Verdichtungsvolumen (10) abschaltbar und zuschaltbar ist.

7. Geschlossene Niveauregelanlage nach einem der Ansprüche 4 bis 6, **dadurch gekennzeichnet, dass**
- eine zweite Saugraumleitung (60) vorhanden ist, die einerseits an das erste Verdichtungsvolumen (10) angeschlossen ist, und andererseits an den Saugraum (4) angeschlossen ist, wobei die zweite Saugraumleitung (60) durch ein drittes steuerbares Ventil (62) durchgeschaltet oder gesperrt werden kann,
- in der ersten Auslassleitung (14) ein viertes steuerbares Wegeventil (62) liegt, mit der die erste Auslassleitung (14) durchgeschaltet oder gesperrt werden kann, wobei die zweite Auslassleitung (22) hinter dem vierten Wegeventil (62) an die erste Auslassleitung (14) angeschlossen ist, und
- wobei das dritte und das vierte steuerbare Wegeventil so gesteuert werden, dass die erste Auslassleitung (14) gesperrt ist, wenn die zweite Saugraumleitung (60) durchgeschaltet ist bzw. die erste Auslassleitung (14) durchgeschaltet ist, wenn die zweite Saugraumleitung (60) gesperrt ist.

8. Geschlossene Niveauregelanlage nach Anspruch 7, **dadurch gekennzeichnet, dass** das dritte steuerbare Wegeventil und das vierte steuerbare Wegeventil in einem einzigen steuerbaren 3/2 Wegeventil (62) zusammengefasst sind und die erste Auslassleitung (14) und die zweite Saugraumleitung (60) bis zu dem 3/2 Wegeventil (62) gemeinsam verlaufen.

9. Geschlossene Niveauregelanlage nach einem der Ansprüche 1 bis 8, **dadurch gekennzeichnet, dass** das erste Verdichtungsvolumen (10) wesentlich kleiner ist als das zweite Verdichtungsvolumen (18).

10. Geschlossene Niveauregelanlage nach einem der Ansprüche 1 bis 9, **dadurch gekennzeichnet, dass** der erste Kolben (8) und der zweite Kolben (16) von einem einzigen Motor (30) über eine gemeinsame Kurbelwelle (64) angetrieben werden.

11. Geschlossene Niveauregelanlage nach Anspruch 10, **dadurch gekennzeichnet, dass** der erste Kolben (8) und der zweite Kolben (16) bei einer Umdrehung der Kurbelwelle (64) unterschiedlich lange Hubwege durchlaufen.

12. Geschlossene Niveauregelanlage nach Anspruch 11, **dadurch gekennzeichnet, dass** der erste Kolben (8) und der zweite Kolben (16) jeweils über eine Pleuelstange (70) und ein Pleuellager (68, 72) mit der Kurbelwelle (64) verbunden sind, wobei die Längsachse des ersten Pleuellagers (68) zur Längsachse der Kurbelwelle (64) parallel verschoben ist und die Längsachse des zweiten Pleuellagers (72) in einer Linie mit der Längsachse der Kurbelwelle (64) verläuft.

## Claims

1. Closed ride-height control system for a vehicle, comprising air springs (38), a compressed air accumulator (46) and a compressor (2) having
- a suction chamber (4) which is connected to an inlet line (6),
- a first piston (8),
- a first compression volume (10) which is separated from the suction chamber (4) by the first piston (8) and which can be connected to the suction chamber (4) by means of a first check valve (12) which opens towards the first compression volume (10),
- a first outlet line (14) which is connected at one end to the first compression volume (10) and can be connected at the other end to different consumers, in particular to the air springs (38) or to the compressed air accumulator (46),
- a second piston (16) and
- a second compression volume (18),
**characterized in that**
- the second compression volume (18) is separated from the suction chamber (4) by the second piston (16) and can be connected to the suction chamber (4) by means of a second check valve (20) which opens towards the second compression volume (18),
and **in that**
- the second compression volume (18) can be deactivated and activated, wherein the first compression volume (10) and the second compression volume (18) transfer compressed air independently of one another into the consumers when the second compression volume (18) is connected to the first compression volume (10).

2. Closed ride-height control system according to Claim 1, **characterized in that** the compressor (2) additionally has the following constituent parts:
- a second outlet line (22) which is connected at one end to the second compression volume (18) and can be connected at the other end to different consumers, wherein the second outlet line (22) can be switched into a pass-through position, or blocked, by a first controllable valve (24),
- a first suction chamber line (26) which is connected at one end to the second compression volume (18) and at the other end to the suction chamber (4), wherein the first suction chamber line (26) can be switched into a pass-through position, or blocked, by a second controllable valve (28),
- wherein the first (24) and the second controllable directional valve (28) are controlled such that the second outlet line (22) is blocked when the first suction chamber line (26) is switched into a pass-through position, and the second outlet line (22) is switched into a pass-through position when the first suction chamber line (26) is blocked.

3. Closed ride-height control system according to Claim 2, **characterized in that** the controllable directional valves (24, 28) are electrically controllable.

4. Closed ride-height control system according to either of Claims 2 and 3, **characterized in that** the second outlet line (22) is connected to the first outlet line (14).

5. Closed ride-height control system according to one of Claims 2 to 4, **characterized in that** the first controllable directional valve (24) and the second controllable directional valve (28) are combined in a single controllable 3/2 directional valve, and the second outlet line (22) and the first suction chamber line (26) run jointly to the 3/2 directional valve.

6. Closed ride-height control system according to one of Claims 1 to 5, **characterized in that** the first compression volume (10) can be deactivated and activated.

7. Closed ride-height control system according to one of Claims 4 to 6, **characterized in that**
- a second suction chamber line (60) is provided which is connected at one end to the first compression volume (10) and at the other end to the suction chamber (4), wherein the second suction chamber line (60) can be switched into a pass-through position, or blocked, by a third controllable valve (62),
- in the first outlet line (14) there is situated a fourth controllable directional valve (62) by means of which the first outlet line (14) can be switched into a pass-through position or blocked, wherein the second outlet line (22) is connected, downstream of the fourth directional valve (62), to the first outlet line (14), and
- wherein the third and the fourth controllable directional valve are controlled such that the first outlet line (14) is blocked when the second suction chamber line (60) is switched into a pass-through position, and the first outlet line (14) is switched into a pass-through position when the second suction chamber line (60) is blocked.

8. Closed ride-height control system according to Claim 7, **characterized in that** the third controllable directional valve and the fourth controllable directional valve are combined in a single controllable 3/2 directional valve (62), and the first outlet line (14) and the second suction chamber line (60) run jointly to the 3/2 directional valve (62).

9. Closed ride-height control system according to one of Claims 1 to 8, **characterized in that** the first compression volume (10) is significantly smaller than the second compression volume (18).

10. Closed ride-height control system according to one of Claims 1 to 9, **characterized in that** the first piston (8) and the second piston (16) are driven by a single motor (30) via a common crankshaft (64).

11. Closed ride-height control system according to Claim 10, **characterized in that** the first piston (8) and the second piston (16) cover stroke travels of different lengths during one revolution of the crankshaft (64).

12. Closed ride-height control system according to Claim 11, **characterized in that** the first piston (8) and the second piston (16) are connected to the crankshaft (64) in each case via a connecting rod (70) and a connecting rod bearing (68, 72), wherein the longitudinal axis of the first connecting rod bearing (68) is offset with respect to and parallel to the longitudinal axis of the crankshaft (64), and the longitudinal axis of the second connecting rod bearing (72) runs in alignment with the longitudinal axis of the crankshaft (64).

## Revendications

1. Installation fermée de régulation de niveau pour véhicule, l'installation présentant des amortisseurs pneumatiques (38), un réservoir (46) d'air sous pression et un compresseur (2) qui présente :
un espace d'aspiration (4) raccordé à un conduit d'admission (6),
un premier piston (8),
un premier volume de compression (10) séparé de l'espace d'aspiration (4) par le premier piston (8) et apte à être relié à l'espace d'aspiration (4) par un premier clapet anti-retour (12) qui s'ouvre sur le premier volume de compression (10),
un premier conduit d'échappement (14) qui d'une part est raccordé au premier volume de compression (10) et d'autre part peut être raccordé à différents consommateurs, notamment aux amortisseurs pneumatiques (38) ou au réservoir (46) d'air sous pression,
un deuxième piston (16),
un deuxième volume de compression (18), **caractérisée en ce que**
le deuxième volume de compression (18) est séparé de l'espace d'aspiration (4) par le deuxième piston (16) et peut être raccordé à l'espace d'aspiration (4) par une deuxième vanne anti-retour (20) qui s'ouvre sur le deuxième volume de compression (18) et
**en ce que** le deuxième volume de compression (18) peut être débranché et branché, le premier volume de compression (10) et le deuxième volume de compression (18) transférant indépendamment l'un de l'autre de l'air sous pression aux consommateurs lorsque le deuxième volume de compression (18) est raccordé au premier volume de compression (10).

2. Installation fermée de régulation de niveau selon la revendication 1, **caractérisée en ce que** le compresseur (2) présente en plus les composants suivantes :
un deuxième conduit d'échappement (22) qui d'une part est raccordé au deuxième volume de compression (18) et d'autre part peut être raccordé à différents consommateurs, le deuxième conduit d'échappement (22) pouvant être ouvert ou fermé par une première vanne commandée (24),
un premier conduit (26) d'espace d'aspiration qui est raccordé d'une part au deuxième volume de compression (18) et d'autre part à l'espace d'aspiration (4), le premier conduit (26) d'espace d'aspiration pouvant être raccordé ou bloqué par une deuxième vanne commandée (28),
la première vanne de passage (24) et la deuxième vanne de passage (28) étant commandées de telle sorte que le deuxième conduit d'échappement (22) est fermé lorsque le premier conduit (26) d'espace d'aspiration est ouvert et le deuxième conduit d'échappement (22) est ouvert lorsque le premier conduit (26) d'espace d'aspiration est fermé.

3. Installation fermée de régulation de niveau selon la revendication 2, **caractérisée en ce que** les vannes de passage commandées (24, 28) peuvent être commandées électriquement.

4. Installation fermée de régulation de niveau selon l'une des revendications 2 à 3, **caractérisée en ce que** le deuxième conduit d'échappement (22) est raccordé au premier conduit d'échappement (14).

5. Installation fermée de régulation de niveau selon l'une des revendications 2 à 4, **caractérisée en ce que** la première vanne de passage commandée (24) et la deuxième vanne de passage commandée (28) sont rassemblées en une seule vanne à 3/2 voies commandée et le deuxième conduit d'échappement (22) et la premier conduit (26) d'espace d'aspiration s'étendent conjointement jusqu'à la vanne à 3/2 voies.

6. Installation fermée de régulation de niveau selon l'une des revendications 1 à 5, **caractérisée en ce que** le premier volume de compression (10) peut être débranché et branché.

7. Installation fermée de régulation de niveau selon l'une des revendications 4 à 6, **caractérisée en ce que**
un deuxième conduit (60) d'espace d'aspiration est prévu et est raccordé d'une part au premier volume de compression (10) et d'autre part à l'espace d'aspiration (4), le deuxième conduit (60) d'espace d'aspiration pouvant être ouvert ou fermé par une troisième vanne (62),
**en ce qu'**une quatrième vanne commandée (62) est prévue dans le premier conduit d'échappement (14) et permet d'ouvrir ou de fermer le premier conduit d'échappement (14), le deuxième conduit d'échappement (22) étant raccordé au premier conduit d'échappement (14) en aval de la quatrième vanne de passage (62) et
**en ce que** la troisième et la quatrième vanne de passage commandée sont commandées de telle sorte que le premier conduit d'échappement (14) est fermé lorsque le deuxième conduit (60) d'espace d'aspiration est ouvert et que le premier conduit d'échappement (14) est ouvert lorsque le deuxième conduit (60) d'espace d'aspiration est fermé.

8. Installation fermée de régulation de niveau selon la revendication 7, **caractérisée en ce que** la troisième vanne de passage commandée et la quatrième vanne de passage commandée sont rassemblées en une seule vanne commandée (62) à 3/2 voies et **en ce que** le premier conduit d'échappement (14) et le deuxième conduit (60) d'espace d'aspiration s'étendent conjointement jusqu'à la vanne (62) à 3/2 voies.

9. Installation fermée de régulation de niveau selon l'une des revendications 1 à 8, **caractérisée en ce que** le premier volume de compression (10) est beaucoup plus petit que le deuxième volume de compression (18).

10. Installation fermée de régulation de niveau selon l'une des revendications 1 à 9, **caractérisée en ce que** le premier piston (8) et le deuxième piston (16) sont entraînés par un seul moteur (30) par l'intermédiaire d'un vilebrequin commun (64).

11. Installation fermée de régulation de niveau selon l'une des revendications 10, **caractérisée en ce que** le premier piston (8) et le deuxième piston (16) parcourent des courses de longueurs différentes lors de chaque rotation du vilebrequin (64).

12. Installation fermée de régulation de niveau selon la revendication 11, **caractérisée en ce que** le premier piston (8) et le deuxième piston (16) sont reliés chacun au vilebrequin (64) par un bras de manivelle (70) et un palier de manivelle (68, 72), l'axe longitudinal du premier palier de manivelle (68) étant décalé parallèlement à l'axe longitudinal du vilebrequin (64) et l'axe longitudinal du deuxième palier de manivelle (72) étant colinéaire par rapport à l'axe longitudinal du vilebrequin (64).
